# EUROPÄISCHE PATENTANMELDUNG

(11) **EP 3 929 554 A1**
(43) Veröffentlichungstag der Anmeldung: **29.12.2021**
(21) Anmeldenummer: 20182497.6
(22) Anmeldetag: 26.06.2020
(51) Int. Cl.: G01M 7/00, G01M 13/00, G01M 99/00, G06N 3/04, G06N 3/08

(54) **VERBESSERTE FEHLERERKENNUNG BEI MASCHINEN MITTELS KI**

(71) Anmelder: Siemens Aktiengesellschaft, 80333 München (DE)
(72) Erfinder: Höfig, Kai, 83101 Rohrdorf (DE)

(57) **Zusammenfassung**

Die Erfindung gibt ein automatisiertes Verfahren zur Verbesserung der Fehlererkennung bei Maschinen (1) mittels künstlicher Intelligenz, mit den Schritten:
- Bereitstellen von ersten neuronalen Netzen (N1), die jeweils mit an der Maschine (1) ermittelten Sensorwerten (S1) und zugehörigen, gelabelten Fehlerinformationen (F1) trainiert wurden,
- Erzeugung (102) von serialisierten Daten (SD) aus einer Abfolge von simulierten Sensorwerten (S2) und ihnen durch die ersten neuronalen Netze ausgegebenen interpretierten Fehlerinformationen (F2) und
- Trainieren (104) eines zweiten neuronalen Netzes (N2) mit den serialisierten Daten (SD).

Die Erfindung gibt auch eine zugehörige Vorrichtung an.

## Beschreibung

### GEBIET DER ERFINDUNG

Die Erfindung betrifft ein automatisiertes bzw. computerimplementiertes Verfahren und eine Vorrichtung zur Verbesserung der Fehlererkennung bei Maschinen mittels künstlicher Intelligenz.

### HINTERGRUND DER ERFINDUNG

In industriellen Anwendungen lassen sich häufig Probleme mit Maschinen oder Teilen von Maschinen frühzeitig erkennen. So ist zum Beispiel ein Sensor, der Vibrationen misst, in der Lage, an Hand von spezifischen Vibrationsmustern zu erkennen, ob beispielsweise ein Lager einem Defekt unterliegt, der über einen bestimmten Zeitraum zu einem weiteren Verschleiß führt, der das Lager unbrauchbar macht.

Plötzlich eintretende Ereignisse sind zum Beispiel Abplatzer bei Lagern, die durch eine Vibrationsmusteranalyse erkannt werden können oder etwa kleine Kurzschlüsse in Trafowicklungen. Derartige Ereignisse sind Vorboten eines schleichenden Verschleißes, welcher in einem bestimmten Zeitraum zu einem Defekt einer Maschine führt. Werden diese Ereignisse frühzeitig erkennt, kann einem kostenintensiven Ausfall einer Maschine oder einer Produktionsanlage vorbeugend entgegengewirkt werden (= preventive maintenance, reliability-centered maintenance).

Prinzipiell ist die statische Analyse mit herkömmlichen Algorithmen schwierig. So ist es zunächst notwendig, ausreichend Daten über spezifische Fehlerbilder und deren Repräsentation in Sensorwerten zu ermitteln. Liegen diese Daten vor, kann ein an der Maschine verbauter Sensor eine Wartungsmaßnahme in Gang setzten und so vor einem großen finanziellen Schaden bewahren.

Für diese für den Menschen nur schwer erkennbaren Fehlerbilder, die sich teils nur in minimalen Abweichungen in den Sensordaten äußern, kommen daher Methoden des maschinellen Lernens in Betracht. So können auch komplexe, für einen menschlichen Analysten nur schwer erkennbare und damit auch nur schwer zu automatisierende Analyseergebnisse durch den Computer erlernt werden. Grundlage dafür ist eine ausreichende Datensammlung von Messwerten, die ebendiese Fehlerbilder enthalten.

Innerhalb einer einzelnen Fabrik oder einer einzelnen Maschine sind diese Fehlerbilder im Laufe der Lebensdauer nicht ausreichend vorhanden, um für die Methoden des maschinellen Lernens ausreihend zu sein. Wird allerdings eine ganze Flotte des gleichen Bauteils oder des gleichen Moduls, wie etwa einem Elektromotor kontinuierlich überwacht, und die Daten samt Ausfällen gesammelt, so ergibt sich eine Datensammlung, die in der Lage ist, ein neuronales Netz (= maschinelles Lernen) so zu trainieren, dass Fehler frühzeitig erkannt werden.

Problematisch ist bei einer solchen Flottenüberwachung, dass die Flotte üblicherweise über mehrere Firmen auf der ganzen Welt verteilt ist und diese aus Gründen des Wettbewerbs und der Industriespionage, ihre Daten nicht freigeben können oder wollen. So wäre es beispielsweise möglich, aus einer Datensammlung eines Elektromotors auf die Produktionsmenge eines Bestimmten Gutes zu schließen.

Das Trainieren separater neuronaler Netze in jeder einzelnen Firma macht aus den oben erwähnten Gründen wenig Sinn und das Sammeln der Daten an einer zentralen Stelle ist also auch nicht möglich.

Um das zuvor beschriebene Problem zu lösen, ist es also nötig, die Daten so zu anonymisieren, dass keinerlei Rückschlüsse auf die Produktion eines Herstellers möglich sind. Dazu bekannte Verfahren sind etwa das hinzufügen eines Rauschens, um das Sensorsignal künstlich zu verfälschen.

Einerseits verschlechtert dies die Analyseergebnisse, andererseits löst ein einfaches Rauschen nicht das Problem, da nun trotzdem noch Daten wie etwa die Stillstandzeiten einer Maschine herauszulesen sind. Eine weitere Möglichkeit bestünde darin, die Zeitstempel ebenfalls künstlich zu verfälschen. Geschieht das auf eine Weise, dass Stillstands-Zeiten verschleiert werden, sind die so gewonnenen Sensordaten sicherlich immer weniger brauchbar für das Trainieren eines neuronalen Netzes. Außerdem wird das Vertrauen eines Anlagenbetreiber sicherlich immer noch gering sein, minimal verfälschte Daten an einen unbeteiligten Dritten weiterzugeben.

### ZUSAMMENFASSUNG DER ERFINDUNG

Es ist Aufgabe der Erfindung, eine Lösung anzugeben, die eine Fehlererkennung bei Maschinen aus gemessenen Sensorwerten unter Wahrung der Anonymität von Daten verbessert.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Die Daten einer Maschine, die mit mehreren Sensoren ausgestattet ist, oder die Daten einer kleinen Flotte von Maschinen, die sich alle in Besitz eines Betreibers befinden, können dazu verwendet werden, je ein separates neuronales Netz zu trainieren. Dieses neuronale Netzt lernt nun über die Zeit etwas von dem Fehlermodell der überwachten Maschinen. Es wird nicht besonders gut sein, da möglicherweise nicht alle Fehlerbilder auftreten oder nur sehr wenige Fehlerbilder auftreten, aber ein gewisses Modellwissen entsteht auf diese Weise.

In einem Aspekt der Erfindung stellt sich die Frage, wie die vorhandenen neuronalen Netze ihr Wissen so exportieren können, dass aus vielen (kleinen) neuronalen Netzen zur Fehleranalyse ein großes hochwertiges neuronales Netzt entsteht, das dann wieder dem einzelnen Hersteller (= Maschinenbesitzer) zur verbesserten Analyse seiner Maschine zur Verfügung gestellt werden kann.

Der neue Ansatz hierbei basiert auf einer "Serialisierung" der Informationen des einzelnen (kleinen) neuronalen Netzes (mit einem lokalen Modell) derartig, dass Daten entstehen, die zum Training eines größeren neuronalen Netzes (mit einem globales Modell) nutzbar sind. Die Daten der Serialisierung sind dabei unabhängig von den ursprünglichen Daten, mit denen das neuronale Netz trainiert wurde und lassen keinerlei Rückschlüsse auf die tatsächliche Produktion oder Verwendung der überwachten Maschinen zu.

Die Erfindung beansprucht ein automatisiertes bzw. computerimplementiertes Verfahren zur Verbesserung der Fehlererkennung bei Maschinen mittels künstlicher Intelligenz, aufweisend folgende Schritte:
- Bereitstellen von unterschiedlichen ersten neuronalen Netzen, die jeweils mit an der Maschine ermittelten Sensorwerten, beispielsweise Vibrationsmesswerte, und zugehörigen, gelabelten Fehlerinformationen trainiert wurden,
- Erzeugung von serialisierten Daten aus einer Abfolge von simulierten Sensorwerten und ihnen durch die ersten neuronalen Netze ausgegebenen Fehlerinformationen und
- Trainieren eines zweiten neuronalen Netzes mit den serialisierten Daten.

Ein "Neuronales Netz" im Sinne der Erfindung bezeichnet jede zum maschinellen Lernen geeignete Einrichtung. "Ausgeben" der Fehlerinformation kann auch mit "Zuweisen" bezeichnet werden. Eine "Abfolge" von werten ist gelichbedeutend mit einer "Serie", daher auch die Bezeichnung "Serialisierung".

Die Erfindung bietet den Vorteil, dass unter der Wahrung der Anonymität von Sensorwerten ein sogenanntes "Master" neuronales Netz aufgebaut werden kann, das den Maschinenbesitzern wieder zur Verfügung gestellt werden kann.

In einer Weiterbildung des automatisierten Verfahrens können die simulierten Sensorwerte randomisiert sind und/oder auf einen bestimmten Suchraum anhängig von der Anwendungsdomäne beschränkt werden. Beispielsweise kann eine Raumtemperatur auf einen Werteberich von +4 bis +40 Grad Celsius eingeschränkt werden.

In einer weiteren Ausgestaltung des automatisieren Verfahrens kann mit den serialisierten Daten ein weiteres erstes neuronales Netz trainiert werden und mit den ermittelten Sensorwerten verifiziert werden, wenn das weitere erste neuronale Netz auf die ermittelten Sensorwerten genauso oder zumindest weitestgehend ähnlich wie das zugehörige erste neuronale Netz reagiert.

Dadurch wird sichergestellt, dass das trainierte zweite neuronale Netz ähnlich dem ersten neuronalen Netz reagiert.

In einer weiteren Ausführungsform des Verfahrens kann ein die Fehlererkennung ausführendes globale Modell (Ein Modell ist ein vereinfachtes Abbild der Wirklichkeit.) des trainierten zweiten neuronalen Netzes an die ersten neuronalen Netze verteilt werden.

Dies bietet den Vorteil, dass die Fehlererkennung der ersten neuronalen Netze verbessert wird.

In einer weiteren Ausgestaltung des automatisierten Verfahrens können die serialisierten Daten in eine Cloud übertragen werden und/oder das globale Modell in der Cloud gespeichert werden.

Die Erfindung beansprucht auch eine Vorrichtung, aufweisend mindestens eine Maschine und ein erstes neuronales Netz, wobei das erste neuronale Netz nach dem erfindungsgemäßen Verfahren eingerichtet ist.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
FIG. 1 eine Darstellung des Lernprozesses eines lokalen Modells mittels eines ersten neuronalen Netzes,
FIG. 2 eine Darstellung der Gewinnung von serialisierten Daten,
FIG. 3 eine Darstellung der Verwendung der serialisierten Daten und
FIG. 4 eine Darstellung eines Ausführungsbeispiels des in den FIG. 1 bis FIG. 3 beschriebenen Verfahrens.

### DETAILLIERTE BESCHREIBUNG DER ERFINDUNG

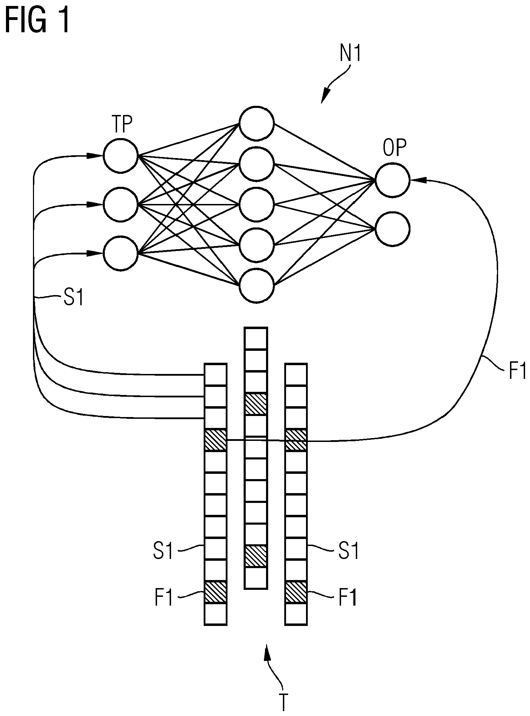

FIG. 1 zeigt eine schematische Darstellung des Lernprozesses eines lokalen Modells mittels eines ersten neuronalen Netzes N1. Dabei werden an der Maschine 1 kontinuierlich gemessene und ermittelte Sensorwerte S1 (auch als Sensordaten bezeichenbar) in Kombination mit den zugehörigen Fehlerinformationen F1 (auch als Fehlerdaten bezeichenbar) verwendet, um das erste neuronale Netz N1 zu trainieren. Die Sensorwerte S1 und die Fehlerinformationen F1 bilden gemeinsam die Trainingsdaten T. Dabei werden die Sensorwerte S1 dem Eingang IP des ersten neuronalen Netzes N1 und die Fehlerinformationen F1 dem Ausgang OP des ersten neuronalen Netzes N1 zugeführt.

Die Fehlerinformationen F1 können im einfachsten Fall die Fehlerbilder "gut" oder "schlecht" enthalten, aber auch weitere komplexere Fehlerszenarien, die im Betrieb einer überwachten Maschine 1 auftreten können, wie etwa: Ausfall der Maschine 1, verringerter Output der Maschine 1, schlechte Produktqualität, Vibrationen, Temperaturanstieg etc.

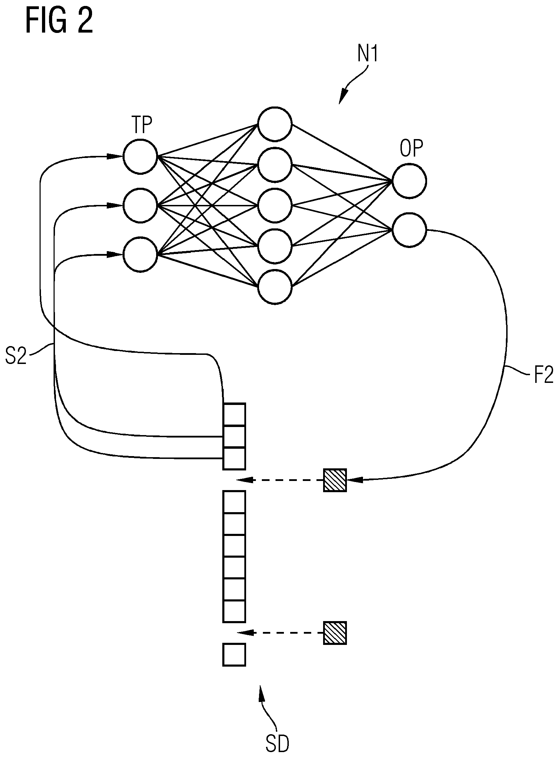

FIG. 2 zeigt eine schematische Darstellung der Gewinnung von serialisierten Daten SD. Um die Informationen, die in dem lokalen Modell des ersten neuronalen Netzes N1 enthalten sind zu exportieren, ohne die ursprünglichen Daten die im Trainingsprozess (= Lernprozess) des ersten neuronalen Netzes N1 verwendet wurden zu benötigen, wird das erste neuronale Netz N1 serialisiert. Dazu werden automatisch neue Daten erzeugt d.h. simuliert (= simulierte Sensorwerte S2), zum Beispiel durch Randomisierung, die dann in das lokale Modell zur Analyse gespeist werden.

Das lokale Modell des ersten neuronalen Netzes N1 analysiert dann diese künstlich erzeugten simulierten Sensorwerte S2 und interpretiert diese. Auf diese Weise entsteht ein neuer Datensatz (= serialisierte Daten SD) mit den zugehörigen interpretierten Fehlerinformationen F2.

Die serialisierten Daten SD werden dann zum Training eines weiteren lokalen Modells verwendet (= künstliches lokales Modell). Reagiert dann das künstliche lokale Modell auf den ursprünglichen Daten genauso wie das lokale Modell, sind die künstlich erzeugten simulierten Sensorwerte S2 eine Serialisierung des lokalen Modells. Dadurch wird die Serialisierung verifiziert.

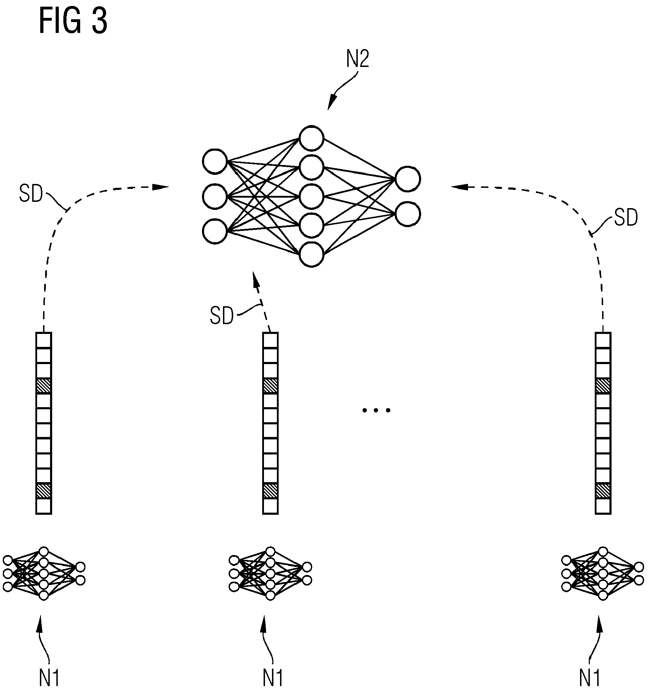

FIG. 3 zeigt nun die schematische Darstellung der Verwendung der serialisierten Daten SD zum Training eines zweiten neuronalen Netzes N2. Die serialisierten Daten SD, die die lokalen Modelle des ersten neuronalen Netze N1 serialisieren, sind völlig unabhängig von den ursprünglichen ermittelten Sensorwerten S1 und können ohne Bedenken Dritten zur Verfügung gestellt werden. In einem letzten Schritt werden nun alle Serialisierungen der lokalen Modelle der ersten neuronalen Netze N1 dazu verwendet, ein globales Modell eines zweiten neuronalen Netzes N2 zu trainieren, das dann wiederum die lokalen Modelle der ersten neuronalen Netze N1 ersetzen kann und so eine verbesserte Fehlerinterpretation ermöglicht.

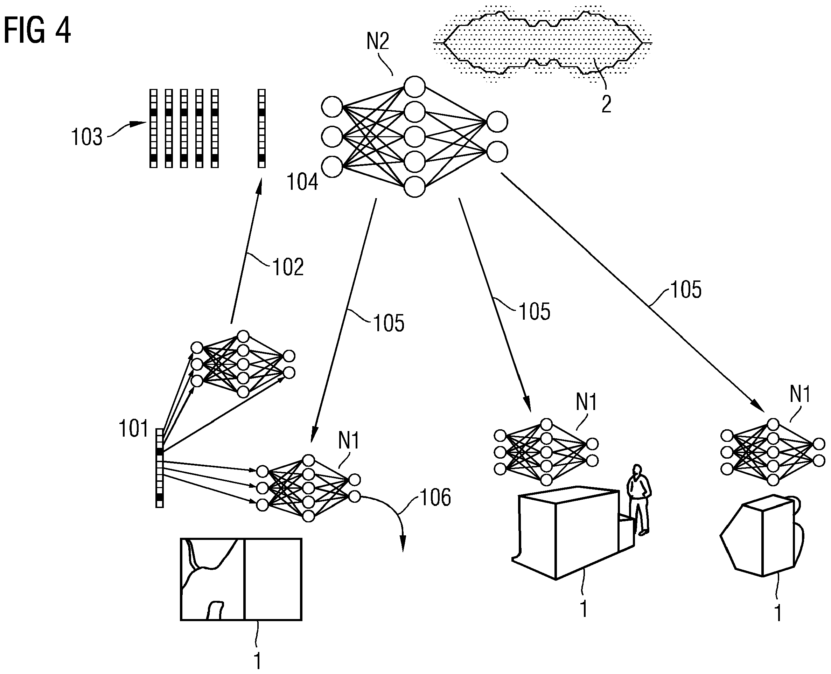

FIG. 4 zeigt eine schematische Darstellung eines Ausführungsbeispiels des in den FIG. 1 bis FIG. 3 beschriebenen Verfahrens. In dem skizzierten Anwendungsbeispiel geht es um die Dienstleistung einer Fehlervorhersage (als "Predictive Maintenance" bekannt), die Kunden von Großgetrieben von der Anwendung "MindSphere" der Siemens AG zur Verfügung gestellt wird. Die Kunden gestatten, dass serialisierte Daten der lokal trainierten ersten neuronalen Netze N1 wieder an die MindSphere zur Verbesserung der Modelle zurückfließen dürfen.

MindSphere ist das cloudbasierte, offene IoT-Betriebssystem der Siemens AG, das Produkte, Anlagen, Systeme und Maschinen verbindet und ermöglicht, die Fülle von Daten aus dem Internet der Dinge (IoT) mit umfangreichen Analysen zu nutzen.

Dazu wird neben einem bereits vorhandenen lokalen neuronalen Netz zusätzlich ein lokales erstes neuronales Netz N1 mit Daten tatsächlicher Ausfälle trainiert (Schritt 101). In regelmäßigen Zeitabständen, z.B. einmal im Monat oder einmal pro Jahr, je nachdem welches Intervall am sinnvollsten erscheint, werden diese lokal trainierten ersten neuronalen Netze N1 mit der zuvor beschriebenen Technologie serialisiert und die serialisierten Daten SD werden der MindSphere wieder zur Verfügung gestellt (Schritt 102).

Dann werden die serialisierten Daten SD in die bereits vorhandenen historischen Daten, die zuvor gesammelt wurden, eingefügt (Schritt 103) und ein globales zweites neuronales Netzt N2 kann mit allen Daten aller Betriebe, die sich zu diesem Vorgehen entschlossen haben und ihre Daten auf diesem Wege zur Verfügung stellen, trainiert werden (Schritt 104). Dabei sind die vorhandenen serialisierten Daten SD nicht als sensibel anzusehen, da sie ja durch den Prozess der Serialisierung anonymisiert wurden, ohne ihre Aussagekraft zu verlieren, also ohne z.B. verfälscht worden zu sein.

Nachdem ein neues verbessertes Modell von der MindSphere erzeugt wurde, kann dieses per Software Rollout wieder den Kunden für ihre neuronalen Netze zur Verfügung gestellt werden (Schritt 105) und ersetzt die aktuell zur Vorhersage verwendeten neuronalen Netze, um nun eine verbesserte Vorhersage zu erlauben (Schritt 106).

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Maschine
- 2: MindSphere
- 101: Training des ersten neuronalen Netzes N1
- 102: zur Verfügung stellen der serialisierten Daten SD
- 103: Einfügen der serialisierte Daten SD in historische Daten
- 104: Training des zweiten neuronalen Netzes N2
- 105: zur Verfügung stellen des verbesserten Modells
- 106: Ersetzen des Modells des ersten neuronales Netzes N1

- F1: Fehlerinformation
- F2: Interpretierte Fehlerinformation
- IP: Eingang
- N1: erstes neuronales Netz
- N2: zweites neuronales Netz
- OP: Ausgang
- S1: ermittelte Sensorwerte
- S2: simulierte Sensorwerte
- SD: serialisierte Daten
- T: Trainingsdaten

## Patentansprüche

1. Automatisiertes Verfahren zur Verbesserung der Fehlererkennung bei Maschinen (1) mittels künstlicher Intelligenz, mit den Schritten:
- Bereitstellen von ersten neuronalen Netzen (N1), die jeweils mit an der Maschine (1) ermittelten Sensorwerten (S1) und zugehörigen, gelabelten Fehlerinformationen (F1) trainiert wurden,
- Erzeugung (102) von serialisierten Daten (SD) aus einer Abfolge von simulierten Sensorwerten (S2) und ihnen durch die ersten neuronalen Netze ausgegebenen interpretierten Fehlerinformationen (F2) und
- Trainieren (104) eines zweiten neuronalen Netzes (N2) mit den serialisierten Daten (SD).

2. Verfahren nach Anspruch 1, wobei die simulierten Sensorwerte (S2) randomisiert sind und/oder auf einen vorgegebenen Suchraum anhängig von der Anwendungsdomäne beschränkt werden.

3. Verfahren nach einem der vorhergehenden Ansprüche, wobei mit den serialisierten Daten (SD) ein weiteres erstes neuronales Netz trainiert und mit den ermittelten Sensorwerten (S1) verifiziert wird, wenn das weitere erste neuronale Netz auf die ermittelten Sensorwerte (S1) genauso oder zumindest weitestgehend ähnlich wie das zugehörige erste neuronale Netz (N1) reagiert.

4. Verfahren nach einem der vorhergehenden Ansprüche, wobei ein die Fehlererkennung ausführendes globale Modell des trainierten zweiten neuronalen Netzes (N2) an die ersten neuronalen Netze (N1) verteilt wird.

5. Verfahren nach einem der vorhergehenden Ansprüche, wobei die serialisierten Daten (SD) in eine Cloud (2) übertragen werden.

6. Verfahren nach Anspruch 4 oder 5, wobei das globale Modell in der Cloud (2) gespeichert wird.

7. Vorrichtung, aufweisend mindestens eine Maschine (1) und ein erstes neuronales Netz (N1), wobei das erste neuronale Netz (N1) nach einem Verfahren der Ansprüche 4 bis 6 eingerichtet ist.

8. Vorrichtung nach Anspruch 7, wobei die ermittelten Sensorwerte (S1) Vibrationsmesswerte sind.
